Europäisches Patentamt

European Patent Office

Office européen des brevets

(19)

(11) **EP 0 589 278 B1**

(12)

# EUROPÄISCHE PATENTSCHRIFT

(45) Veröffentlichungstag und Bekanntmachung des Hinweises auf die Patenterteilung:
**29.12.1999 Patentblatt 1999/52**

(51) Int Cl.6: **H04Q 7/20**, H04B 7/26

(21) Anmeldenummer: **93114350.7**

(22) Anmeldetag: **07.09.1993**

(54) **Mobiles Funknetz mit hierarchischen Zellstrukturen**

Radio mobile network with hierarchical cell structures

Réseau radio mobile avec structure hiérarchique des cellules

(84) Benannte Vertragsstaaten:
**AT BE CH DE DK ES FR GB GR IE IT LI LU MC NL PT SE**

(30) Priorität: **23.09.1992 DE 4231859**

(43) Veröffentlichungstag der Anmeldung:
**30.03.1994 Patentblatt 1994/13**

(73) Patentinhaber: **SIEMENS AKTIENGESELLSCHAFT**
**80333 München (DE)**

(72) Erfinder:
• **Ivanov, Kolio, Dr.**
  **D-81369 München (DE)**
• **Schulz, Egon, Dr.**
  **D-80993 München (DE)**

(56) Entgegenhaltungen:
**EP-A- 0 369 535**      **EP-A- 0 562 743**
**GB-A- 2 242 806**

## Beschreibung

Die Erfindung bezieht sich auf ein mobiles Funknetz mit einer Anzahl von Basisstationen in räumlicher Anordnung nach Art eines Zellularsystems in einer hierarchischen Zellstruktur, bestehend aus einer Makrozelle und wenigstens einer Mikrozelle.

Die Umschaltung (Handover) vom Funkversorgungsbereich einer Zelle in den einer benachbarten Zelle kann aus unterschiedlichen Gründen initiiert werden. Handover-Gründe können zum Beispiel sein, daß der empfangene Pegel eine gewisse Schwelle unterschritten hat, die Qualität (Bitfehlerrate - BER) zu schlecht ist, die Distanz zur bedienenden Basisstation zu groß geworden ist, wegen zu hoher Interferenz, wegen Power Budget einer besseren Zelle oder auch aus Verkehrsgründen. Dabei handelt es sich um sogenannte statische Handover-Entscheidungen, d.h. die von der Mobilstation und/oder Basisstation gemessenen Daten, nämlich Pegel, Qualität, Distanz usw. oder die aus den gemessenen Daten abgeleiteten Größen werden unter Ausnutzung eines Filters beispielsweise durch Mittelung der Meßdaten mit von O & M (Operation and Maintenance) administrierbaren, zeitlich konstanten Schwellen verglichen.

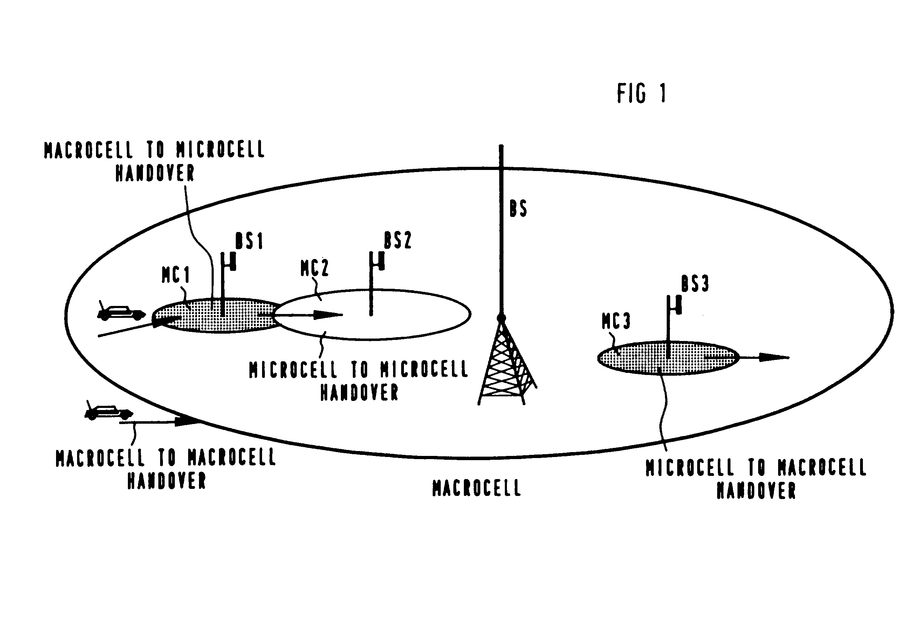

Um sowohl Kanalkapazitäten in Gebieten mit hohen Teilnehmerdichten als auch eine ausreichende Versorgung zwischen Gebieten hoher Teilnehmerdichte zur Verfügung zu stellen, wird man zu gemischten oder hierarchischen Zellstrukturen übergehen, bestehend aus kleinen Zellen (Mikrozellen), die wiederum in einer großen Zelle (Makrozelle, auch Schirmzelle genannt) integriert sind. Einen solchen Aufbau zeigt Figur 1. Dabei sind innerhalb einer Makrozelle mit der Basisstation BS mehrere Mikrozellen MC1, MC2, MC3 mit den Basisstationen BS1, BS2, BS3 angeordnet. Für eine Mobilstation, die sich in einem solchen gemischten Zellsystem bewegt, gibt es vier Arten des Handovers, nämlich von der Makrozelle zu einer weiteren Makrozelle, von der Makrozelle zu einer Mikrozelle, von einer Mikrozelle zu einer weiteren Mikrozelle sowie von der Mikrozelle zu einer Makrozelle. Der Radius der Mikrozellen wird dabei sehr klein sein und in der Regel nur einige hundert Meter betragen. Durch die Mikrozellen sollen die sich langsam bewegenden Mobilfunkteilnehmer versorgt werden, die Makrozellen (Schirmzellen) hingegen sollen die Funkversorgung der sich schnell bewegenden Mobilstationen gewährleisten.

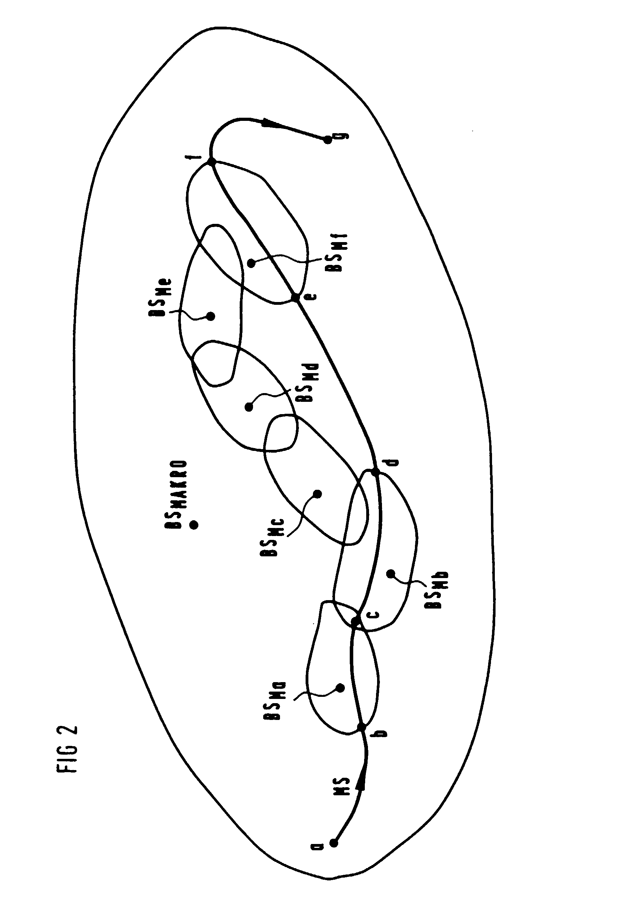

Durch die Aneinanderreihung von Mikrozellen, welche in der Makrozelle integriert sind, besteht die Möglichkeit, daß eine sich schnell bewegende Mobilstation, die der Feststation der Makrozelle zugeordnet ist und in den Funkversorgungsbereich einer in der Makrozelle befindlichen Mikrozelle hineinfährt, durch statische Handover-Entscheidungen der Feststation der Mikrozelle zugeordnet wird. Da die Mobilstation sich schnell bewegt und die Mikrozelle einen kleinen Durchmesser hat, wird die Mobilstation die Mikrozelle schnell wieder verlassen, und es steht ein neuer Handover an. Dabei wird entweder ein Handover für die Mobilstation in die ursprüngliche Makrozelle, oder, wenn an die durchquerte Mikrozelle eine weitere Mikrozelle angrenzt, in die angrenzende Mikrozelle angefordert. Ein solches Szenario einer Mobilstation in einer hierarchischen Zellstruktur, das sich beliebig fortsetzen läßt, ist in Fig. 2 dargestellt. Dabei sind innerhalb einer Makrozelle mit der Basisstation $BS_{Makro}$ eine Reihe von Mikrozellen integriert mit den Feststationen $BS_{Ma}$ $BS_{Mb}$, $BS_{Mc}$, $BS_{Md}$, $BS_{Me}$ und $BS_{Mf}$. Eine Mobilstation MS bewegt sich längs eines Fahrweges von Punkt a nach Punkt g über die Punkte b,c,d,e und f, die im Randbereich einiger Mikrozellen liegen. Die Mobilstation ist dabei zunächst der Makrozelle mit der Feststation $BS_{Makro}$ zugeordnet und baut ein Gespräch auf. Sie fährt dann in den Funkversorgungsbereich der Mikrozelle mit der Feststation $BS_{Ma}$ hinein. Der Handover-Entscheidungsprozeß fordert einen Handover für die Mobilstation in die Mikrozelle mit der Feststation $BS_{Ma}$ an. Die Mobilstation MS fährt dann in den Funkversorgungsbereich der Mikrozelle mit der Feststation $BS_{Mb}$ hinein. Der Handover-Entscheidungsprozeß fordert einen Handover für die Mobilstation in die Mikrozelle mit der Feststation $BS_{Mb}$ an. Danach verläßt die Mobilstation den Funkversorgungsbereich der Mikrozelle mit der Feststation $BS_{Mb}$. Der Handover-Entscheidungsprozeß fordert nun einen Handover für die Mobilstation in die Makrozelle mit der Feststation $BS_{Makro}$ an. Die weiteren Mikrozellen liegen außerhalb des Fahrweges der Mobilstation, so daß erst beim Hineinfahren der Mobilstation in den Funkversorgungsbereich der Mikrozelle mit der Feststation $BS_{Mf}$ der Handover-Entscheidungsprozeß einen Handover für die Mobilstation in die Mikrozelle mit der Feststation $BS_{Mf}$ anfordert. Beim Verlassen des Funkversorgungsbereichs der Mikrozelle mit der Feststation $BS_{Mf}$ fordert der Handover-Entscheidungsprozeß einen Handover für die Mobilstation in die Makrozelle mit der Feststation $BS_{Makro}$ an. Die Mobilstation beendet das Gespräch und bleibt der Makrozelle mit der Feststation $BS_{Makro}$ zugeordnet. Dies alles erfordert einen hohen Signalisierungsaufwand. Weiter ist festzustellen, daß bei träger Ausführung der Handover-Entscheidungen, beispielsweise bei großer Mittelungslänge der gemessenen Daten, das fortwährende Weiterreichen von einer Mikrozelle zu einer anderen zum Gesprächsverlust führen kann.

Bei den bisherigen Verfahren wird zur Entscheidung eines Handovers für eine Mobilstation die Geschwindigkeit des Mobilfunkteilnehmers nicht berücksichtigt. Die Handover-Verfahren basieren auf statischen Handover-Entscheidungen, d.h. die von der Mobilstation und/oder Basisstation gemessenen Daten oder aus den Meßdaten abgeleiteten Größen werden unter Ausnutzung eines Filters dem Handover-Entscheidungsprozeß zugeführt. In diesem werden die gefilterten Daten mit fest eingestellten oder O & M administrierbaren, zeitlich konstanten Schwellen verglichen. Unter- oder Überschreiten die gefilterten Daten die entsprechenden Schwellen, so wird für die betreffende Mobilstation ein Handover angefordert.

Aus der GB-A-2 242 806 ist ein zellulares Funksystem bekannt, bei dem ein Handover von einer Makrozelle zu einer Mikrozelle nur vorgenommenn wird, wenn sich ein Handgerät eine vorgegebene Zeitperiode in der Mikrozelle aufhält und die Funkverbindung eine bestimmte Verbindungsqualität übersteigt.

Der Erfindung liegt die Aufgabe zugrunde, in einer solchen gemischten Zellstruktur die Anzahl der Handover für sich schnell bewegende Mobilstationen zu reduzieren.

Diese Aufgabe wird bei einem Mobilfunknetz der eingangs beschriebenen Art gemäß der Erfindung gelöst. Dabei wird eine Ermittlung in einem Handover-Entscheidungsprozeß, ob sich eine Mobilstation eines mobilen Funkteilnehmers im Funkversorgungsbereich der in der Makrozelle enthaltenen Mikrozelle befindet oder sich dieser nähert, durch Vergleich der von der Mobilstation und/oder der Feststation ermittelten Meßdaten über Pegel, Qualität, Distanz u.a. und/oder aus den Meßdaten abgeleiteter Größen mit Schwellen durchgeführt. Zusätzlich zu den statischen Handover-Entscheidungen wird die Geschwindigkeit des mobilen Funkteilnehmers für eine Umschaltung vom Funkversorgungsbereich der Makrozelle in den Funkversorgungsbereich einer oder mehrerer weiterer Mikrozellen berücksichtigt. Bei einem positiven Ergebnis der Ermittlung im Handover-Entscheidungsprozeß wird eine Einrichtung zur Zeiterfassung (Timer) mit einem beliebigen, aber festen Zeitintervall gestartet, wobei pro Nachbarzelle ein Timer verwaltet wird. Auf der Basis der im Handover-Entscheidungsprozeß einlaufenden Daten während des Zeitintervalls wird fortlaufend ermittelt, ob sich die Mobilstation noch im Funkversorgungsbereich der Mikrozelle befindet. Für den Fall, daß sich die Mobilstation nach Ablauf des Zeitintervalls noch immer im Funkversorgungsbereich der Mikrozelle befindet, wird ein Handover für die Mobilstation in die Mikrozelle angefordert. Für den Fall, daß sich die Mobilstation nicht mehr im Funkversorgungsbereich der Mikrozelle befindet, wird kein Handover angefordert.

Bei diesem geschwindigkeitabhängigen Handover-Verfahren für hierarchische Zellstrukturen wird danach gesehen, ob die Mobilstationen innerhalb eines Zeitintervalls den Funkversorgungsbereich einer Mikrozelle durchquert haben. Befinden sich die Mobilstationen nach dem Zeitintervall, d.h. nach Ablauf eines Timers, noch im Funkversorgungsbereich bezüglich der Mikrozelle, so wird ein Handover für die betreffenden Mobilstationen in die Mikrozelle angefordert.

Vorteilhafte Ausgestaltungen und Weiterbildungen des Erfindungsgegenstandes sind in den Unteransprüchen angegeben.

Nachstehend wird die Erfindung anhand von in der Zeichnung dargestellten Ausführungsbeispielen näher erläutert.

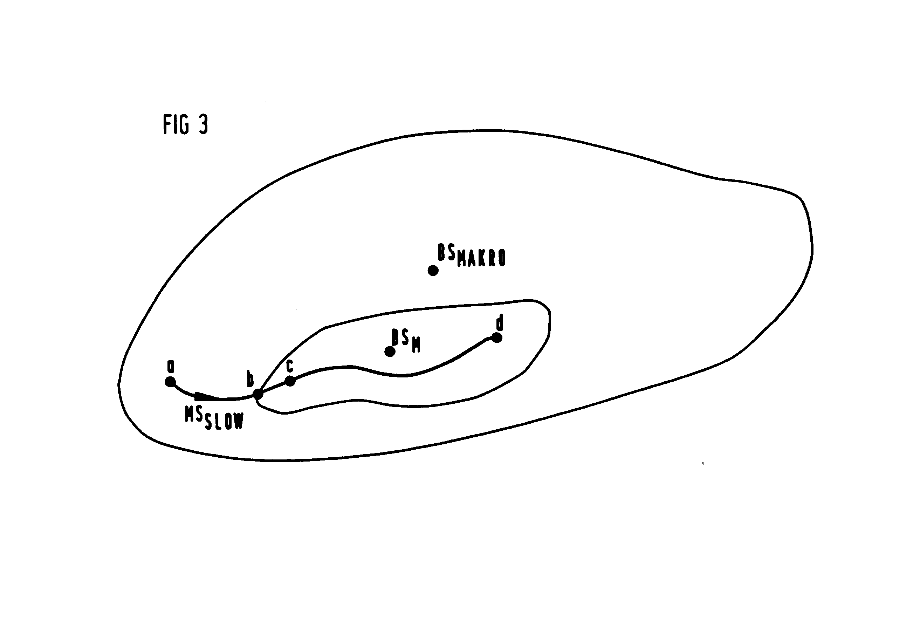

Es sind dabei in den Figuren 3 bis 7 in Teildarstellungen verschiedene Varianten gezeigt für eine sich mit unterschiedlicher Geschwindigkeit bewegende Mobilstation innerhalb einer Makrozelle und in dieser integrierten Mikrozellen. Der Umschaltevorgang wird unter Hinweis auf die betreffenden Varianten erläutert.

Als erfindungswesentliches Merkmal bei den hier beschriebenen Verfahren zur Entscheidungsfindung eines Handovers einer Mobilstation in einer hierarchischen Zellstruktur aus einer Makrozelle und mindestens einer oder mehreren Mikrozellen ist anzusehen, daß zusätzlich zu den statischen Handover-Entscheidungen die Geschwindigkeit der betreffenden Mobilstation berücksichtigt wird. Die Integration der Geschwindigkeit der Mobilstationen bzw. der Mobilfunkteilnehmer läßt sich in allen Mobilfunksystemen realisieren, in denen in beliebigen, aber festen Zeitintervallen Meßdaten, wie z.B. empfangener Pegel, Qualität, Distanz usw. von der Mobilstation und/oder Basisstation und/oder aus den Meßdaten abgeleiteten Größen an den Handover-Entscheidungsprozeß geliefert werden. Im GSM-System werden in der Regel in $T_{SACCH}$-Intervallen oder einem Vielfachen davon Meßdaten und/oder aus den Meßdaten abgeleitete Größen an den Handover-Entscheidungsprozeß übermittelt. Ein $T_{SACCH}$-Intervall beträgt ca. 480 msec.

Als Ausgangssituation ist vorgesehen, daß sich eine Mobilstation in einer hierarchisch angeordneten Zellstruktur befindet, bestehend aus einer Makrozelle und mindestens einer oder mehreren Mikrozellen, und daß die Mobilstation der Feststation der Makrozelle zugeordnet ist. Durch den Vergleich der von der Mobilstation und/oder der Feststation ermittelten Meßdaten und/oder aus den Meßdaten abgeleiteten Größen wird mit Schwellen im Handover-Entscheidungsprozeß ermittelt, ob sich die Mobilstation in dem Funkversorgungsbereich der in der Makrozelle enthaltenen Mikrozelle befindet, oder sich dem Funkversorgungsbereich der in der Makrozelle enthaltenen Mikrozelle nähert. Ist dies der Fall, so wird im Handover-Entscheidungsprozeß ein Timer mit dem Anfangswert $T_0$ gestartet. Der Timer bzw. das zu überwachende Zeitintervall wird dabei so gewählt, daß es größer oder gleich einer Meßperiode der im Handover-Entscheidungsprozeß einlaufenden Meßdaten ist. Für das GSM-System sollte demzufolge das zu überwachende Zeitintervall ein Vielfaches von $T_{SACCH}$ sein.

Während des Ablaufens des Timers $T_{H0}$ bzw. während des beliebigen, aber festen Zeitintervalls, wird auf der Basis der im Handover-Entscheidungsprozeß einlaufenden Meßdaten von der Mobilstation und/oder Basisstation und/oder der aus den Meßdaten abgeleiteten Größen ermittelt, ob die Mobilstation sich noch immer im Funkversorgungsbereich der Mikrozelle befindet.

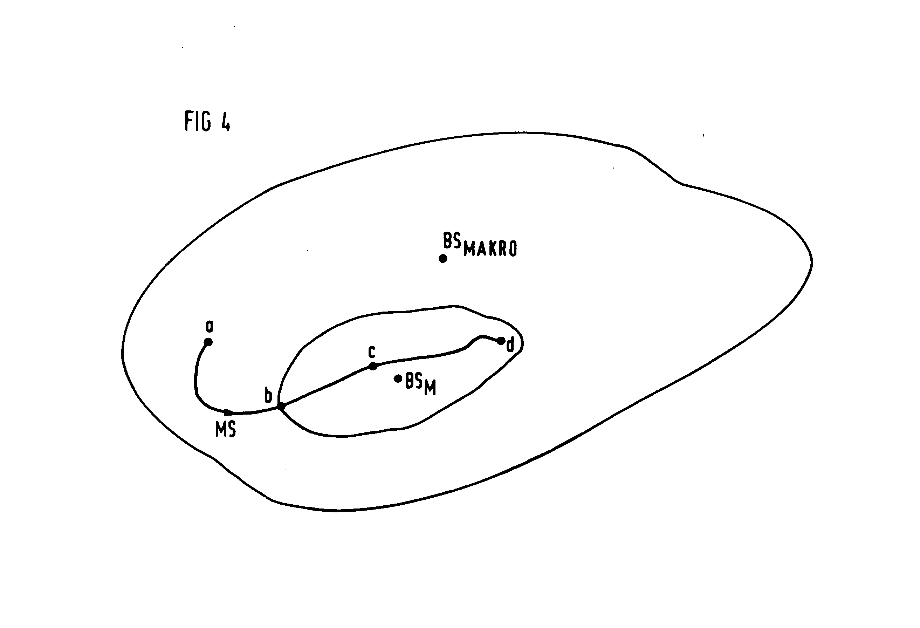

Wird im Handover-Entscheidungsprozeß festgestellt, daß nach Ablauf des Timers bzw. nach dem Zeitintervall die Mobilstation sich noch immer im Funkversorgungsbereich der Mikrozelle befindet, so wird ein Handover für die betreffende Mobilstation in die Mikrozelle hinein angefordert. Dies trifft zu für die beiden Varianten nach Figur 3 und 4, von denen die eine den Handovervorgang für eine langsame Mobilstation wiedergibt, für die kurz nach dem Erreichen des Funkversorgungsbereichs der Mikrozelle der Timer abläuft und daher ein Handover in die Mikrozelle hinein beantragt und erfolgreich durchgeführt wird, und die andere für eine mittelschnelle Mobilstation, die innerhalb des Zeitintervalls eine längere Distanz in der Mikrozelle zurücklegt und wobei vor dem Verlassen des Funkversorgungsbereichs der Mikrozelle der Timer abläuft und daher für die Mobilstation ein Handover in die Mikrozelle hinein beantragt und erfolgreich durchgeführt wird.

Beim Ausführungsbeispiel nach Fig. 3 ist eine von Punkt a startende langsame Mobilstation MS der Makrozelle mit der Fest station $BS_{Makro}$ zugeordnet und baut ein Gespräch auf. Am Punkt b erreicht die Mobilstation MS eine in der Makrozelle integrierte Mikrozelle mit der Feststation $BS_M$. Die Mobilstation MS befindet sich im Funkversorgungsbereich der Mikrozelle und der Handover-Entscheidungsprozeß startet den Timer $T_{H0}$. Es wird angenommen, daß der Timer $T_{H0}$ abgelaufen ist, wenn die Mobilstation MS den Punkt c unweit von b erreicht hat. Da die Mobilstation MS sich noch im Funkversorgungsbereich der Mikrozelle mit der Feststation $BS_M$ befindet, wird ein Handover in die Mikrozelle angefordert. Bei Erreichen von Punkt d , der sich ebenfalls innerhalb der Mikrozelle befindet, beendet die Mobilstation MS das Gespräch in der Mikrozelle und geht in den Idle Mode.

Beim Ausführungsbeispiel nach Fig. 4 wird eine mittelschnelle Mobilstation MS angenommen, die der Makrozelle mit der Feststation $BS_{Makro}$ zugeordnet ist und ein Gespräch aufbaut. Beim Hineinfahren der Mobilstation MS in den Funkversorgungsbereich der Mikrozelle mit der Feststation $BS_M$ (Punkt b) , wird durch den Handover-Entscheidungsprozeß der Timer $T_{H0}$ gestartet. Da sich die Mobilstation nach Ablauf des Timers $T_{H0}$ am Punkt c noch im Funkversorgungsbereich der Mikrozelle mit der Feststation $BS_M$ befindet, wird ein Handover in die Mikrozelle angefordert. Auch hierbei beendet die Mobilstation MS das Gespräch am Punkt d innerhalb der Mikrozelle und geht in den Idle Mode.

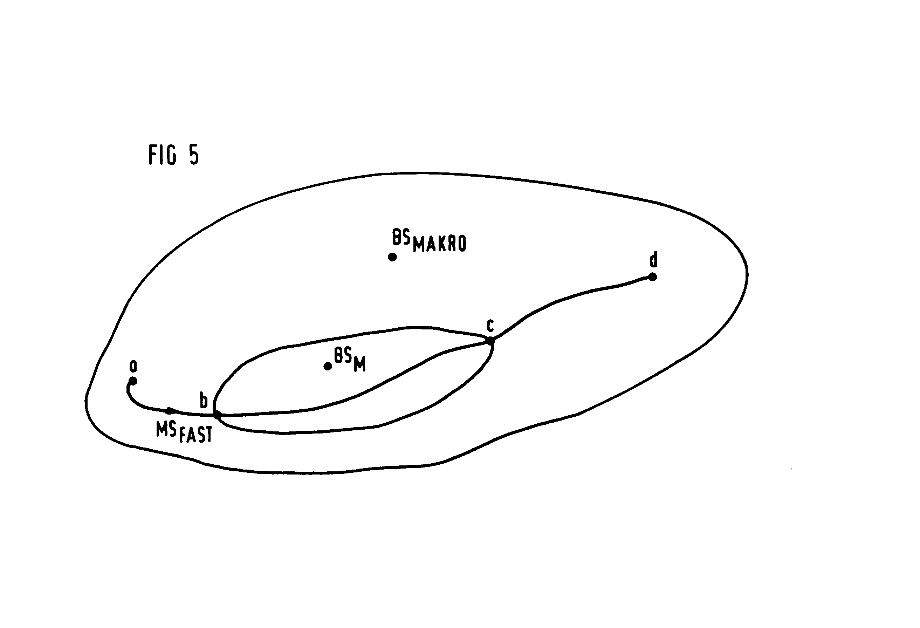

Wird dagegen im Handover-Entscheidungsprozeß festgestellt, daß nach Ablauf des Timers bzw. nach dem Zeitintervall die Mobilstation sich nicht mehr im Funkversorgungsbereich der Mikrozelle befindet, so wird kein Handover für die betreffende Mobilstation in die Mikrozelle hinein angefordert. In Figur 5 ist der Fall dargestellt, bei dem eine schnelle Mobilstation MS der Makrozelle mit der Feststation $BS_{Makro}$ zugeordnet ist und ein Gespräch aufbaut. Die Mobilstation fährt im Punkt b in den Funkversorgungsbereich der Mikrozelle mit der Feststation $BS_M$ hinein und der Handover-Entscheidungsprozeß startet den Timer $T_{H0}$. Die schnelle Mobilstation MS verläßt im Punkt c den Funkversorgungsbereich der Mikrozelle mit der Feststation $BS_M$

vor Ablauf des Timers $T_{H0}$. Der Timer $T_{H0}$ wird gestoppt, zurückgesetzt und nicht wieder gestartet, da die Mobilstation MS sich nicht mehr im Funkversorgungsbereich der Mikrozelle befindet. Die schnelle Mobilstation MS bleibt der Makrozelle mit der Feststation $BS_{Makro}$ zugeordnet. In dieser beendet die Mobilstation MS das Gespräch und geht in den Idle Mode.

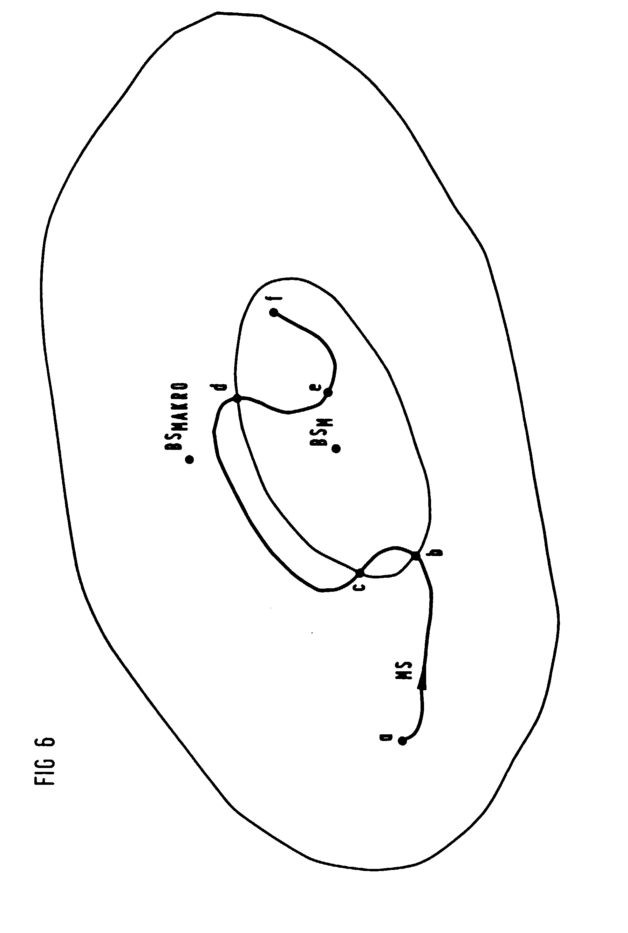

Wird vor dem Ablaufen des Timers bzw. innerhalb des Zeitintervalls auf der Basis der im Handover-Entscheidungsprozeß einlaufenden Meßdaten von Mobilstation und/oder Basisstation und/oder der aus den Meßdaten abgeleiteten Größen ermittelt, daß die Mobilstation sich nicht mehr im Funkversorgungsbereich der Mikrozelle befindet, so wird der Timer zurückgesetzt. Der Timer wird wieder gestartet, wenn im Handover-Entscheidungsprozeß erkannt wird, daß sich die Mobilstation wieder im Funkversorgungsbereich einer Mikrozelle befindet. Dieser Fall ist im Ausführungsbeispiel nach Fig. 6 wiedergegeben. Es kann sich beispielsweise um das Szenario in einer Großstadt handeln, bei der entsprechende Umwege zu fahren sind, um zum Ziel zu gelangen, wobei der Stadtkern zusätzlich durch eine Mikrozelle versorgt wird. Wie in den voran beschriebenen Ausführungsbeispielen ausgeführt, ist auch hier eine sich zunächst außerhalb der Mikrozelle befindende Mobilstation MS der Makrozelle der Feststation $BS_{Makro}$ zugeordnet und baut dort ein Gespräch auf. Die Mobilstation fährt am Punkt b in den Funkversorgungsbereich der Mikrozelle mit der Feststation $BS_M$ hinein und der Handover-Entscheidungsprozeß startet den Timer $T_{H0}$. Die Mobilstation MS verläßt am Punkt c den Funkversorgungsbereich der Mikrozelle wieder, bevor der Timer $T_{H0}$ abgelaufen ist. Der Timer $T_{H0}$ wird gestoppt, zurückgesetzt und nicht wiedergestartet, da die Mobilstation MS sich nicht mehr im Funkversorgungsbereich der Mikrozelle mit der Feststation $BS_M$ befindet. Die Mobilstation MS bleibt der Makrozelle mit der Feststation $BS_{Makro}$ zugeordnet. Am Punkt d erreicht die Mobilstation MS wieder den Funkversorgungsbereich der Mikrozelle und der Handover-Entscheidungsprozeß startet daraufhin den Timer $T_{H0}$. Da sich die Mobilstation im Punkt e noch im Funkversorgungsbereich der Mikrozelle mit der Feststation $BS_M$ befindet und der Timer $T_{H0}$ abgelaufen ist, wird für die Mobilstation MS vom Handover-Entscheidungsprozeß ein Handover in die Mikrozelle angefordert. Am Punkt f, der sich ebenfalls noch innerhalb der Mikrozelle befindet, beendet die Mobilstation MS das Gespräch und bleibt der Mikrozelle mit der Feststation $BS_M$ zugeordnet.

Das Verfahren ist auch dann anwendbar, wenn eine Mobilstation zu der Feststation einer Mikrozelle einer hierarchischen Zellstruktur zugeordnet ist und auf eine angrenzende Mikrozelle zufährt. Bewegt sich die Mobilstation langsam auf die angrenzende Mikrozelle zu, so wird mit diesem Verfahren für die Mobilstation ein Handover in die angrenzende Mikrozelle angefordert; bewegt sie sich dagegen schnell, so wird für sie ein Handover in die darüberliegende Makrozelle angefordert.

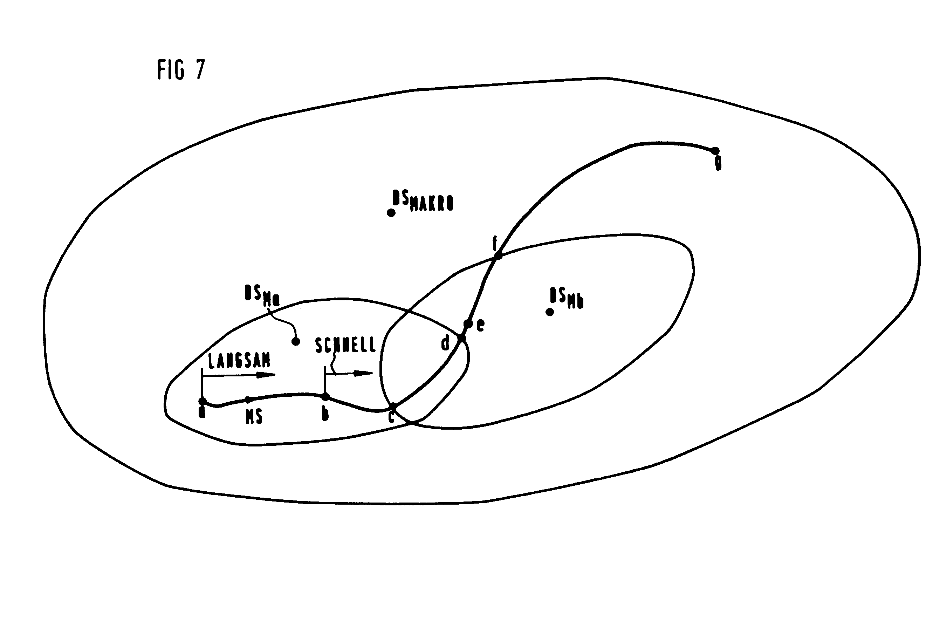

Eine solche Variante ist in Figur 7 dargestellt, bei der eine langsame Mobilstation in einer Mikrozelle ein Gespräch aufbaut und sich mit schneller Geschwindigkeit einer angrenzenden Mikrozelle nähert, hineinfährt und nach kurzer Zeit die angrenzende Mikrozelle verläßt. Im einzelnen sieht das so aus, daß eine langsame Mobilstation MS am Punkt a innerhalb der linken Mikrozelle der Feststation $BS_{Ma}$ dieser Mikrozelle zugeordnet ist und ein Gespräch aufbaut. Im Bereich von Punkt b erhöht die Mobilstation MS die Geschwindigkeit. Die mittlerweile schnelle Mobilstation MS erreicht am Punkt c den Versorgungsbereich der angrenzenden Mikrozelle mit der Feststation $BS_{Mb}$, worauf der Timer $T_{H0}$ im Handover-Entscheidungsprozeß gestartet wird. Die schnelle Mobilstation MS verläßt den Funkversorgungsbereich der ursprünglichen Mikrozelle mit der Feststation $BS_{Ma}$ am Punkt d. Der Timer $T_{H0}$ ist zu diesem Zeitpunkt noch nicht abgelaufen, und es wird daher vom Handover-Entscheidungsprozeß kein Handover in die rechte angrenzende Mikrozelle mit der Feststation $BS_{Mb}$ angefordert. Da die Mobilstation aber den ursprünglichen Funkversorgungsbereich verläßt, stellt der Handover-Entscheidungsprozeß auf der Basis der Meßdaten von Mobilstation und/oder Basisstation $BS_{Ma}$ fest, daß die Verbindung zwischen Mobilstation MS und Feststation $BS_{Ma}$ der linken Mikrozelle in der Qualität zu schlecht geworden ist oder der Pegel zu klein oder die Distanz zu groß geworden ist und fordert daher auf der Basis statischer Entscheidungen einen Handover in die darüberliegende Makrozelle an. Am benachbarten Punkt e ist der Handover in die Makrozelle erfolgreich durchgeführt. Mit der erfolgreichen Durchführung des Handovers wird der Timer $T_{H0}$ gestoppt und zurückgesetzt. Da die Mobilstation MS sich noch im Funkversorgungsbereich der rechten Mikrozelle mit der Feststation $BS_{Mb}$ befindet, wird der Timer $T_{H0}$ wieder gestartet. Die schnelle Mobilstation MS verläßt am Punkt f vor dem Ablaufen des Timers $T_{H0}$ die Mikrozelle mit der Feststation $BS_{Mb}$. Daher wird der Timer $T_{H0}$ gestoppt, zurückgesetzt und nicht wieder neu gestartet. Die Mobilstation MS beendet das Gespräch in der Makrozelle (Punkt g) und geht in den Idle Mode.

Zwischen dem Zurücksetzen des Timers und dem Wiederstarten des Timers $T_{H0}$ für ein und dieselbe Verbindung kann ein Überwachungstimer TR eingeführt werden. Der Überwachungstimer TR wird beim Zurücksetzen des Timers gestartet und erst nach Ablauf des Überwachungstimers darf der Timer, falls sich die Mobilstation in dem Funkversorgungsbereich einer Zelle befindet, wieder gestartet werden. Timer $T_{H0}$ und Überwachungstimer TR können auch als Zähler implementiert sein. Da an eine Mikrozelle mehrere Mikrozellen angrenzen können, wird ein Timer pro Nachbarzelle verwaltet. Somit werden also alle Nachbarzellen in den Handover-Entscheidungsprozeß mit einbezogen. Hinsichtlich der Verwaltung von Timer und zusätzlichem Überwachungstimer sind verschiedene Möglichkeiten gegeben: Zunächst werden beide pro Verbindung verwaltet. Timer und Überwachungstimer können sowohl den uplink als auch den downlink bei Duplex-Systemen überwachen oder auch nur den downlink oder nur den uplink. Die Anfangswerte der Timer und Überwachungstimer im uplink und downlink können identisch oder auch unterschiedlich sein. Sie können ferner durch eine abgesetzte Einheit (z.b. Operation and Maintenance) mit Anfangswerten belegt werden.

Nachfolgend wird noch ein Zahlenbeispiel angegeben, um den Zusammenhang zwischen dem Handover und der Fahrzeuggeschwindigkeit deutlich zu machen. Dabei wird eine hierarchische Zellstruktur betrachtet, bestehend aus einer Makrozelle und einer Mikrozelle mit einem Durchmesser von 500 m. Eine Mobilstation mit einer durchschnittlichen Geschwindigkeit von 10 km/h benötigt ca. 180 s für das Durchqueren der Mikrozelle. Hat die Mobilstation eine durchschnittliche Geschwindigkeit von 30 km/h, so benötigt sie ca. 60 s und eine Mobilstation mit der Geschwindigkeit von 60 km/h durchquert die Mikrozelle in 30 s. Das heißt, daß alle Mobilstationen, die von der Makrozelle in die Mikrozelle hineinfahren und sich bis zum Ablauf des Timers, der mit dem Startwert 60 s belegt wurde, noch im Funkversorgungsbereich der Mikrozelle befinden, durch das vorstehend beschriebene Verfahren der Feststation der Mikrozelle zugeordnet werden. Dies bedeutet, daß für alle Mobilstationen, die mit einer höheren Geschwindigkeit als 30 km/h in die Mikrozelle hineinfahren, kein Handover in die Mikrozelle hinein angefordert wird.

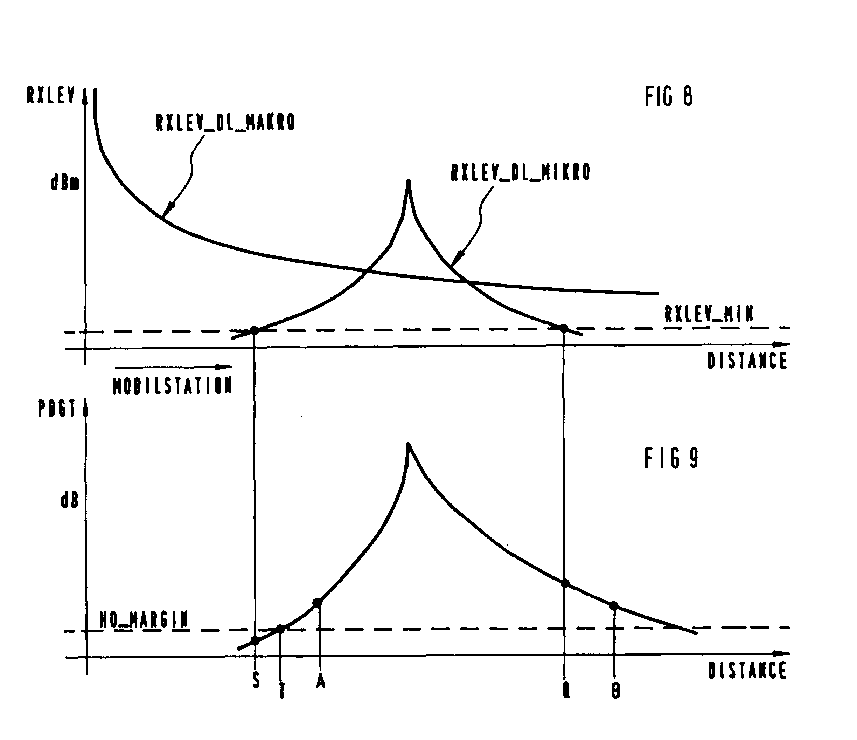

Anhand der Figuren 8 und 9 soll das funktionale Verhalten des Handover-Entscheidungsprozesses für schnelle und langsame Mobilstationen erläutert werden.

In Figur 8 ist der empfangene Pegel einer Mobilstation als Funktion des Abstandes von der Feststation einer Makrozelle und der einer in der Makrozelle enthaltenen Mikrozelle skizziert. Dabei bedeutet RXLEV DL MAKRO der empfangene Pegel der Mobilstation von der Makrozelle und RXLEV DL MIKRO der von der Mikrozelle. Ferner ist in Figur 8 der minimale empfangene Pegel eingezeichnet, den eine Mobilstation von einer Feststation empfangen muß, um eine Verbindung zu der betreffenden Feststation aufzubauen.

Figur 9 zeigt den Verlauf einer aus den empfangenen Pegeln RXLEV DL MAKRO, RXLEV DL MIKRO und weiteren Variablen berechnete Größe. Diese Größe wird Power Budget (PBGT) genannt und gibt den relativen Pegel zu der Nachbarzelle (hier Mikrozelle) an. Ist das PBGT größer als Null bzw. eine Schwelle, so ist die Funkversorgung durch die Nachbarzelle (Mikrozelle) besser als durch die zugeordnete Feststation. Durch die Größe PBGT läßt sich die Zellgrenze einer Zelle angeben.

Das PBGT kann wie folgt berechnet werden:

$$PBGT = MIN(MS\ MAKRO, P) - RXLEV\ DL\ MAKRO$$

- (MIN(MS MIKRO,P) - RXLEV DL MIKRO)

Dabei bedeutet P die maximale mögliche Sendeleistung der MS, MS MAKRO bzw. MS MIKRO die maximal erlaubte Sendeleistung der Mobilstation in der Makrozelle bzw. Mikrozelle, RXLEV DL MAKRO und RXLEV DL MIKRO die empfangenen Pegel von der Makro- und Mikrozelle.

Ferner ist in Figur 9 die Schwelle HO MARGIN eingezeichnet. Mit HO MARGIN und mit der Schwelle RXLEV MIN wird die Zellgrenze definiert.

Sind die Bedingungsgleichungen

$$\text{RXLEV DL MIKRO} > \text{RXLEV MIN} \qquad (1)$$

$$\text{PBGT} > \text{HO MARGIN} \qquad (2)$$

erfüllt, so hat die Mobilstation die Zellgrenze zur Mikrozelle überschritten und es wird der Timer $T_{H0}$ mit dem Startwert $T_0$ gestartet. Ist mindestens eine der beiden Bedingungen nicht erfüllt, so wird der Timer $T_{H0}$ gestoppt und zurückgesetzt.

Wird nach Ablauf des Timers $T_{H0}$ festgestellt, daß die beiden Bedingungsgleichungen (1) und (2) noch erfüllt sind, so wird vom Handover-Entscheidungsprozeß ein Handover für die Mobilstation in die Mikrozelle angefordert.

Wird dagegen nach Ablauf des Timers $T_{H0}$ vom Handover-Entscheidungsprozeß festgestellt, daß die beiden Bedingungsgleichungen (1) und (2) nicht gleichzeitig erfüllt werden, so wird vom Handover-Entscheidungsprozeß kein Handover für die Mobilstation in die Mikrozelle angefordert.

Eine Mobilstation bewegt sich auf die Mikrozelle zu. Nachdem die Mobilstation die Zellgrenze der Mikrozelle erreicht hat (Punkt T in Figur 9), wird der Timer $T_{H0}$ mit dem Startwert $T_0$ gestartet. Im Punkt A läuft der Timer $T_{H0}$ ab und der Handover-Entscheidungsprozeß stellt fest, daß die Bedingungen (1) und (2) von der Mobilstation erfüllt werden. Daraufhin fordert der Handover-Entscheidungsprozeß einen Handover für die Mobilstation in die Mikrozelle an.

Läuft dagegen der Timer $T_{H0}$ ab, nachdem die Mobilstation den Punkt B erreicht hat oder erreicht die Mobilstation vor dem Ablaufen des Timers $T_{H0}$ den Punkt B, bei dem die Bedingung (1) nicht mehr erfüllt ist, so wird der Timer $T_{H0}$ gestoppt und zurückgesetzt und die schnelle Mobilstation hat ohne Handover die Mikrozelle durchquert.

**Patentansprüche**

1.  Mobiles Funknetz mit einer Anzahl von Basisstationen (BS, BS1, BS2, BS3) in räumlicher Anordnung nach Art eines Zellularsystems in einer hierarchischen Zellstruktur, bestehend aus einer Makrozelle und wenigstens einer Mikrozelle (MC1), wobei eine Ermittlung in einem Handover-Entscheidungsprozeß, ob sich eine Mobilstation eines mobilen Funkteilnehmers im Funkversorgungsbereich der in der Makrozelle enthaltenen Mikrozelle (MC1) befindet oder sich dieser nähert, durch Vergleich von der Mobilstation und/oder der Feststation (BS1) ermittelter Meßdaten über Pegel, Qualität, Distanz u.a. und/oder aus den Meßdaten abgeleiteter Größen mit Schwellen, durchgeführt wird,
    **gekennzeichnet durch**

    -   eine Umschaltung vom Funkversorgungsbereich der Makrozelle in den Funkversorgungsbereich einer oder mehrerer weiterer Mikrozellen (MC1, MC2, MC3) unter Berücksichtigung der Geschwindigkeit des mobilen Funkteilnehmers zusätzlich zu den statischen Handover-Entscheidungen,
    -   Starten einer Einrichtung zur Zeiterfassung (Timer) mit einem beliebigen, aber festen Zeitintervall bei positivem Ergebnis der Ermittlung im Handover-Entscheidungsprozeß, wobei pro Nachbarzelle (MC1, MC2) ein Timer verwaltet wird,
    -   eine fortlaufende Ermittlung auf der Basis der im Handover-Entscheidungsprozeß einlaufenden Daten während des Zeitintervalls, ob sich die Mobilstation noch im Funkversorgungsbereich einer der Mikrozellen (MC1, MC2) befindet,
    -   Anforderung eines Handovers für die Mobilstation in die entsprechende Mikrozelle nach Ablauf des Zeitintervalls für den Fall, daß sich die Mobilstation noch immer im Funkversorgungsbereich der Mikrozelle befindet, und
    -   keine Anforderung eines Handovers für den Fall, daß sich die Mobilstation nicht mehr im Funkversorgungsbereich der Mikrozelle befindet.

2.  Funknetz nach Anspruch 1,
    **dadurch gekennzeichnet, daß**
    der Timer dann zurückgesetzt wird, wenn sich auf der Basis der im Handover-Entscheidungsprozeß auflaufenden Meßdaten innerhalb des Zeitintervalls ergibt, daß sich die Mobilstation nicht mehr im Funkversorgungsbereich der Mikrozelle befindet.

3.  Funknetz nach Anspruch 2,
    **dadurch gekennzeichnet, daß**
    der Timer erneut gestartet wird, wenn im Handover-Entscheidungsprozeß erkannt wird, daß sich die Mobilstation wieder im Funkversorgungsbereich einer Mikrozelle (MC1, MC2, MC3) befindet.

4. Funknetz nach einem der Ansprüche 1 bis 3, **gekennzeichnet durch** einen entsprechenden Ablauf für den Fall, daß die Mobilstation zu der Feststation (BS1) einer Mikrozelle (MC1) einer hierarchischen Zellstruktur zugeordnet ist und sich einer angrenzenden Mikrozelle (MC2) nähert.

5. Funknetz nach Anspruch 4, **dadurch gekennzeichnet, daß** der Timer nach einem erfolgreichen Handover gestoppt und zurückgesetzt wird.

6. Funknetz nach einem der Ansprüche 1 bis 5, **dadurch gekennzeichnet, daß** das zu überwachende Zeitintervall größer oder gleich einer Meßperiode für die Bewertung der im Handover-Entscheidungsprozeß eingehenden Empfangsdaten ist.

7. Funknetz nach einem der Ansprüche 1 bis 6, **dadurch gekennzeichnet, daß** zwischen dem Zurücksetzen des Timers und dem Wiederstarten des Timers für ein und dieselbe Verbindung ein Überwachungstimer vorgesehen ist, der beim Zurücksetzen des Timers gestartet wird und bewirkt, daß der Timer erst nach Ablauf des Überwachungstimers, falls sich die Mobilstation im Funkversorgungsvereich einer Mikrozelle (MC1, MC2, MC3) befindet, wieder gestartet werden kann.

8. Funknetz nach einem der Ansprüche 1 bis 7, **dadurch gekennzeichnet, daß** der Timer und/oder Überwachungstimer als Zähler implementiert sind.

9. Funknetz nach einem der Ansprüche 1 bis 8, **dadurch gekennzeichnet, daß** das jeweils einzustellende Zeitintervall ein Maß für die entsprechend der Fahrzeuggeschwindigkeit zu erwartende Verweildauer in der Mikrozelle (MC1, MC2, MC3) bildet.

## Claims

1. Mobile radio network having a number of base stations (BS, BS1, BS2, BS3) in a physical arrangement in the manner of a cellular system in a hierarchical cell structure, comprising a macrocell and at least one microcell (MC1), in which a handover decision process is used to determine whether a mobile station of a mobile radio subscriber is located in the radio supply area of the microcell (MC1) contained in the macrocell, or is approaching this area, by comparison of measured data (determined by the mobile station and/or the fixed station (BS1)) relating to level, quantity, distance etc. and/or variables derived from the measured data, with thresholds, characterized by

- a handover from the radio supply area of the macrocell to the radio supply area of one or more further microcells (MC1, MC2, MC3) taking into account the speed of the mobile radio subscriber in addition to the static handover decisions,
- starting of a device for timing (timer) with any required, but fixed, time interval if the result of the determination in the handover decision process is positive, one timer being controlled per adjacent cell (MC1, MC2),
- on the basis of the data used in the handover decision process, determining continuously (during the time interval) whether the mobile station is still located in the radio supply area of one of the microcells (MC1, MC2),
- requesting a handover for the mobile station to the corresponding microcell after the time interval has elapsed in the situation where the mobile station is still located in the radio supply area of the microcell, and
- not requesting a handover in the situation where the mobile station is no longer located in the radio supply area of the microcell.

2. Radio network according to Claim 1, characterized in that the timer is reset when, on the basis of the measurement data which are used in the handover decision process, it is found within the time interval that the mobile station is no longer located in the radio supply area of the microcell.

3. Radio network according to Claim 2, characterized in that the timer is restarted if the handover decision process finds that the mobile station is once again located in the radio supply area of a microcell (MC1, MC2, MC3).

4. Radio network according to one of Claims 1 to 3, characterized by a corresponding sequence for the situation when the mobile station is assigned to the fixed station (BS1) of a microcell (MC1) in a hierarchical cell structure, and is approaching an adjacent microcell (MC2).

5. Radio network according to Claim 4, characterized in that, after a successful handover, the timer is stopped and reset.

6. Radio network according to one of Claims 1 to 5,

characterized in that

the time interval to be monitored is greater than or equal to a measurement period for the assessment of the received data used in the handover decision process.

7. Radio network according to one of Claims 1 to 6, characterized in that

a monitoring timer is provided between the resetting of the timer and the restarting of the timer for one and the same link, which monitoring timer is started when the timer is reset and whose effect is that the timer cannot be started again until the monitoring timer has timed out, if the mobile station is located in the radio supply area of a microcell (MC1, MC2, MC3).

8. Radio network according to one of Claims 1 to 7, characterized in that

the timer and/or the monitoring timer are implemented as counters.

9. Radio network according to one of Claims 1 to 8, characterized in that

the respective time interval to be set is a measure of the time for which the vehicle is expected to remain in the microcell (MC1, MC2, MC3), on the basis of the vehicle speed.

**Revendications**

1. Réseau de radio mobile avec un nombre de stations de base (BS1, BS2, BS3) disposées géographiquement selon un système cellulaire avec une structure hiérarchique de cellules comprenant une macro-cellule et au moins une micro-cellule (MC1), une recherche étant effectuée, au cours d'une procédure de décision de transfert (hand over), pour déterminer si une station mobile d'un usager de radio mobile se trouve dans la zone de couverture radio de la micro-cellule (MC1) contenue dans la macro-cellule, ou s'en rapproche, par comparaison avec des seuils de valeurs de mesure du niveau de puissance, de la qualité, de la distance et autres détectées par la station mobile et/ou par la station fixe (BS1) et/ou de valeurs déduites des valeurs de mesure, **caractérisé par**

 - une commutation de la zone de couverture radio de la macro-cellule vers la zone de couverture radio d'une ou plusieurs autres micro-cellules (MC1, MC2, MC3) en tenant compte de la vitesse de l'usager de radio mobile en plus des décisions statiques de transfert (hand over),
 - démarrage d'un dispositif compteur de temps ou minuterie (timer) avec une constante de temps quelconque, mais fixe, dans le cas où la recherche au cours de la procédure de décision de transfert (hand over) a un résultat positif, une minuterie (ou timer) étant gérée pour chaque cellule voisine (MC1, MC2),

 - une recherche permanente, sur la base des données arrivant dans la procédure de décision de transfert (hand over) pendant la constante de temps, pour déterminer si la station mobile se trouve encore dans la zone de couverture radio d'une des micro-cellules (MC1, MC2),
 - requête de transfert (hand over) vers la micro-cellule correspondante, pour la station mobile, après écoulement de la constante de temps, pour le cas où la station mobile se trouve toujours dans la zone de couverture radio de la micro-cellule et
 - aucune requête de transfert (hand over) pour le cas où la station mobile ne se trouve plus dans la zone de couverture radio de la micro-cellule.

2. Réseau radio selon la revendication 1 **caractérisé par le fait**

que la minuterie (timer) est remise à zéro quand il apparaît, sur la base des données de mesure arrivant dans la procédure de décision de transfert (hand over) pendant la constante de temps, que la station mobile ne se trouve plus dans la zone de couverture radio de la micro-cellule.

3. Réseau radio selon la revendication 2 **caractérisé par le fait**

que la minuterie (timer) est redémarrée quand il apparaît, au cours de la procédure de décision de transfert (hand over), que la station mobile se trouve de nouveau dans la zone de couverture radio d'une micro-cellule (MC1, MC2, MC3).

4. Réseau radio selon l'une des revendications 1 à 3 **caractérisé par**

un déroulement correspondant pour le cas où la station mobile est affectée à la station fixe (BS1) d'une micro-cellule (MC1) d'une structure cellulaire hiérarchisée et se rapproche d'une micro-cellule voisine.

5. Réseau radio selon la revendication 4 **caractérisé par le fait**

que la minuterie (timer) est stoppée après exécution d'un transfert (hand over), puis remise à zéro.

6. Réseau radio selon l'une des revendications 1 à 5 **caractérisé par le fait**

que l'intervalle de temps à surveiller est supérieur ou égal à une période de mesure pour l'analyse des données de réception arrivant dans la procédure de décision de transfert (hand over).

7. Réseau radio selon l'une des revendications 1 à 6 **caractérisé par le fait** que, entre la remise à zéro de la minuterie (timer) et le redémarrage de la minuterie (timer) pour une même communication, il est prévu une minuterie (timer) de supervision qui démarre lors de la remise à zéro de la minuterie (timer) et qui fait en sorte que la minuterie (timer) ne peut être redémarrée qu'après l'arrêt de la minuterie (timer) de supervision, dans le cas où la station mobile se trouve dans la zone de couverture radio d'une micro-cellule (MC1, MC2, MC3).

8. Réseau radio selon l'une des revendications 1 à 7 **caractérisé par le fait** que la minuterie (timer) et/ou la minuterie (timer) de supervision sont implémentées comme compteurs.

9. Réseau radio selon l'une des revendications 1 à 8 **caractérisé par le fait** que l'intervalle de temps, qu'il faut régler dans chaque cas, donne une valeur pour la durée de séjour dans la micro-cellule (MC1, MC2, MC3) en fonction de la vitesse du véhicule.

FIG 1

MACROCELL TO MICROCELL
HANDOVER

BS

BS1

BS2

MC1

MC2

BS3

MC3

MICROCELL TO MICROCELL
HANDOVER

MACROCELL TO MACROCELL
HANDOVER

MACROCELL

MICROCELL TO MACROCELL
HANDOVER

EP 0 589 278 B1

FIG 2

FIG 3

EP 0 589 278 B1

EP 0 589 278 B1

FIG 4

BS MAKRO

d

c

BS M

b

MS

a

13

FIG 5

FIG 6

FIG 7

FIG 8

FIG 9

EP 0 589 278 B1